# EUROPEAN PATENT SPECIFICATION

(11) **EP 2 630 863 B1**
(45) Date of publication and mention of the grant of the patent: **02.09.2015**
(21) Application number: 12167670.4
(22) Date of filing: 11.05.2012
(51) Int. Cl.: A01K 5/01

(54) **Pet mat assembly**
Haustiermattenanordnung
Ensemble de tapis pour animaux de compagnie

(30) Priority: 02.02.2012 IN DE02912012
(43) Date of publication of application: 28.08.2013
(73) Proprietor: Arjan Impex Pvt Ltd, Delhi 110042 (IN)
(72) Inventor: Kalra, Atul, 110042 Delhi (IN)
(74) Representative: Aamand, Jesper L.

(56) References cited:
- JP-A- 2002 306 008
- US-A1- 2004 237 901
- US-A1- 2009 068 423
- US-A1- 2011 253 054

## Description

### FIELD OF THE INVENTION

The present invention relates to a pet mat assembly for feeding animals. More particularly relates to an assembly for feeding pet animals

### BACKGROUND OF THE INVENTION

Pets like dogs and cats often have a habit of pushing their food around while eating from a plate or bowl, thus creating a mess, resulting in the spillage of food/water on the floors or carpet. There are many pet bowls known in the art which have a non-slip/skid surface to protect the bowl from slipping over the floor in order to minimize the spillage of food/water contained in bowl. These bowls face certain limitations as they are usually made up of multiple-components which are either separately assembled or integrated in one, and hence these bowls are costly. In case of any damages assembled bowls are required to be replaced immediately. In case of integrated bowls, proper washing of such bowls always remains a difficult task; also they are not safe for a dishwasher, and hence it is difficult to provide proper hygiene to one's pet.

US2004/0237901 discloses a pet mat; wherein the upper surface is provided with one or more raised bumps such that a common pet bowl placed on any part of upper surface will fall within the interstices between the pattern of the bumps and prevent the movement of the bowl around the mat. The main disadvantage of this product is that it is difficult to clean and therefore not a long term solution.

US2009/0068423 discloses a food safe pet mat comprising a support and an outer layer, wherein outer layer is plastic food safe and an image is printed on at least one of the support surfaces. While this article may have aesthetic appeal, is still does not successfully solve the problem of spillage of food by pets while eating. There are several other mats which are present in the market.

Hence, there is need to provide an improved device to protect the floors and carpet from food/water spillage.

Thus the present invention addresses this need and provides an article for feeding animals, which effectively prevents the movement of the bowl during feeding by an animal and subsequent spillage of the contents thereof.

### OBJECT OF THE INVENTION

It is an object of the invention is to provide a pet mat assembly for feeding animals, which prevents or minimizes the spillage of food/water caused by the pets.

### SUMMARY OF THE INVENTION

The invention provides a pet mat assembly according to claim 1.

In one aspect the invention provides a mat having a top layer and a bottom layer, wherein the top layer is firmly affixed to the bottom layer. The top layer may be a single layer composed of the magnetic material. In the alternative, the top layer may be a laminated layer comprising a plurality of layers wherein the magnetic element is dispersed within the laminated layer, preferably immediately facing the top portion. The top layer for example may be composed of single or multiple layers of plastic material and within the first or the second layer, the magnetic element may be dispersed. In the alternative, the entire top layer may be magnetized.

The bottom layer of the mat is preferably composed of a non-skid material such as an elastomer, thermoplastic elastomer, natural rubber or any such material.

The top layer is firmly affixed to the bottom layer of the mat by any appropriate means such as heat-sealing or by virtue of an adhesive.

In another aspect, the top layer of the mat may optionally be provided with at least one upstanding restrainer which may be made of magnetic material. The restrainer may be inbuilt on the surface of the top layer of the mat. The restrainer may preferably be semicircular or circular such that any pet bowl or container can be accommodated within the area formed by the restrainer.

The container, as contemplated by the invention may be a common pet bowl, whose bottom part is whose bottom is made of a ferretic material. The ferretic material may be selected from group consisting of ferretic metal such as iron and ferretic alloy such as steel. The bottom of the container being made of ferretic material is magnetically responsive to the magnetic element in the top layer of the mat such that when the container is in magnetic engagement with the top layer of the mat, the relative movement of the container with respect to the mat is restricted, and this prevents spillage of food or the content of the pet bowl.

### BRIEF DESCRIPTION OF DRAWINGS

**Figure 1****:** is a cross-sectional view depicting the components of a mat made in accordance with a preferred embodiment of the invention.
**Figure 2****:** is a cross-sectional view depicting the components of the pet feeding assembly made in accordance with a preferred embodiment of the invention.
**Figure 3****:** is a cross-sectional view depicting components of the feeding assembly of the invention wherein the mat is provided with a lamination layer.
**Figure 4****:** depicts an embodiment of the feeding assembly of the invention comprising a mat having a single layer of a non-skid layer having a magnetic element.
**Figure 5****:** depicts an embodiment of the feeding assembly, showing a magnetic element present within circumference/ periphery of a retainer.
**Figure 6****:** depicts an article of the present invention, showing a magnetic element disposed throughout a mat.
**Figure 7****:** depicts an article of the present invention comprising a container having a plastic cover.

### DETAILED DESCRIPTION OF THE INVENTION

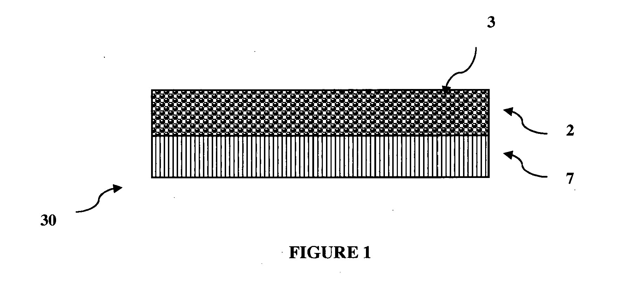

Various embodiments made employ the concepts of the invention are illustrated by the following figures. The figures are only meant to illustrate the concepts of the invention and are not intended to limit the scope of the invention in any manner. Figure 1 shows a mat made in accordance with an embodiment of the invention wherein the mat (30) is composed of a top layer (2) and a backing or a bottom layer (7). The top layer (2) includes magnetic elements (3) dispersed throughout the top layer.

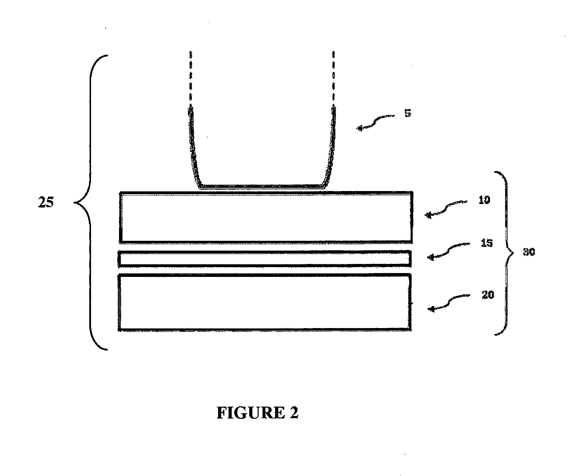

Another embodiment of the invention is depicted in Figure 2 which shows a cross-sectional view of the feeding assembly (25) for feeding pet animals. The assembly comprises a mat (30) provided with a magnetic element dispersed throughout a layer, thus constituting a magnetic layer (10) immediately on the top layer. In addition the mat is provided with a non-skid layer (20) on the lower side of the mat. The magnetic layer and the non-skid layer are bonded together by an adhesive (15), by heat lamination or any other means known in the art. Figure 2 also shows a container (5) which may be any commonly used pet bowl, whose bottom is made of ferretic material such that when positioned on the mat (30), its movement about the mat is substantially restrained and reduced, thus the spillage of the contents of the bowl is substantially decreased. The ferretic material may be selected from group consisting of ferretic metal such as iron and ferretic alloy such as steel.

The non-skid bottom layer (20) of the mat may preferably be made up of an elastomer such as rubber, thermoplastic elastomer; and any other non-skid or non-slid material which prevents the mat (30) to skid or slip over a surface such as floor, table, wooden surface, concrete surface, cemented surface, surface inside vehicles and other such surfaces.

The magnetic layer (10) of the mat (30) may be made up of at least one magnetically active element. The magnetic element may be selected from group consisting of ferrous magnet, ferric magnet, permanent magnets and other elements having a magnetic property. The magnetic layer (10) may capable of holding a container (5) by magnetic force generated by the magnetic element. The bottom of the container may be made of any magnetically responsive material which may be attracted to the mat by a magnetic force. Preferably the container (5) may be made up of any material having a ferromagnetic property such that the positive relative permeability of the material is greater than 1. The ferromagnetic materials of the present invention may be selected from group consisting of ferromagnetic metals such as iron; ferromagnetic alloys such as steel; ferretic stainless steel; an alloy containing iron, aluminum, nickel, cobalt, and copper, carbon steel and other material with ferromagnetic properties known in the art. The magnetic layer (10) may be capable of holding the container (5) by magnetic force developed by its magnetic field and thus minimizes the movement of container (5) on the surface of mat (30). Magnetic layer (10) also protects the container (5) from getting inverted in case of accidental push of the container (5) by the pet/its owner.

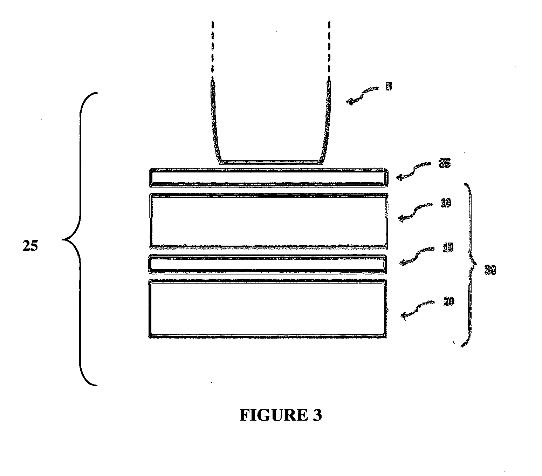

Figure 3 is a cross-sectional view of another embodiment of the invention, depicting an article (25) comprising a mat (30) wherein the exposed or outer surface of the mat (30) may be optionally coated with a lamination film/layer (35) for an additional protection and /or to increase its durability. The container (5) may be adapted to be positioned on the mat (30) such that the movement of the container with respect to the mat is restricted. The lamination film used may preferably be non-toxic and may be integrated with decorative images or patterns to increase the aesthetic value of the mat. The exposed or outer surface/lamination layer (35) of mat (30) may preferably be selected from smooth, slightly rough, textured, printed, patterned, and mixture thereof.

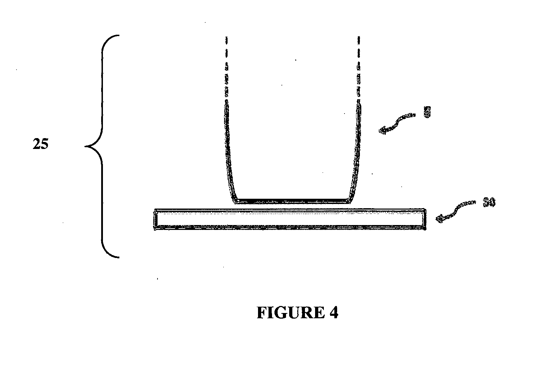

Figure.4 depicts a cross-sectional view of an embodiment of the invention wherein the container (5) adapted to be positioned on the mat (30) such that the movement of the container is restrained. As shown in the Figure.4 the mat (30) may be made up of the single layer having the magnetic element embedded in the non-skid layer of the present invention.

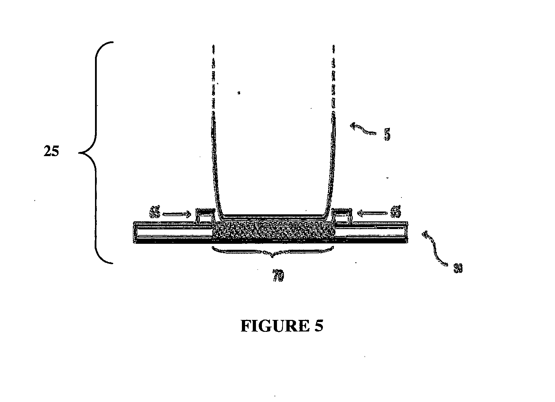

Figure 5 depicts a pet mat assembly (25) comprising of the mat (30); and the container (5) adapted to be positioned on the mat (30) such that the movement of the container is restrained. The mat (30) further comprises a retainer (65) on an upper surface of the said mat (30) to place the container (5) such that the container will not move outside the boundaries of retainer (65). In a preferred embodiment, the mat (30) comprises of magnetic elements limited to the circumference/periphery of the retainer (65). Magnetic elements (70) present in the mat (30) is selected from, but not limited to, ferrous magnet, ferric magnet, permanent magnets and other elements having a magnetic property.

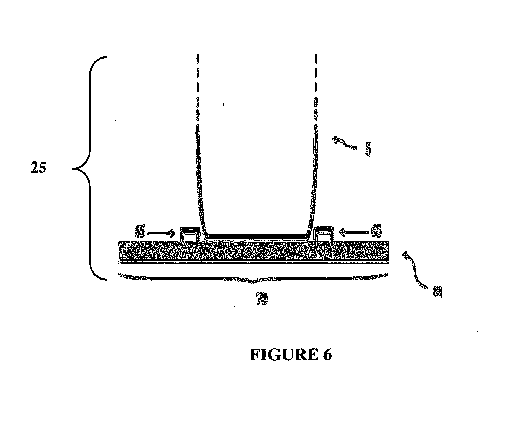

Figure 6 depicts, a pet mat assembly (25) comprising of the mat (30); and the container (5) adapted to be positioned on the mat (30) such that the movement of the container is restrained, wherein the mat (30) further comprises of a retainer (65) on the outer surface of the said mat (30) to place the container (5) such that the container will not move outside the boundaries of retainer (65). The mat (30) possesses magnetic elements (70) uniformly throughout the mat (30).

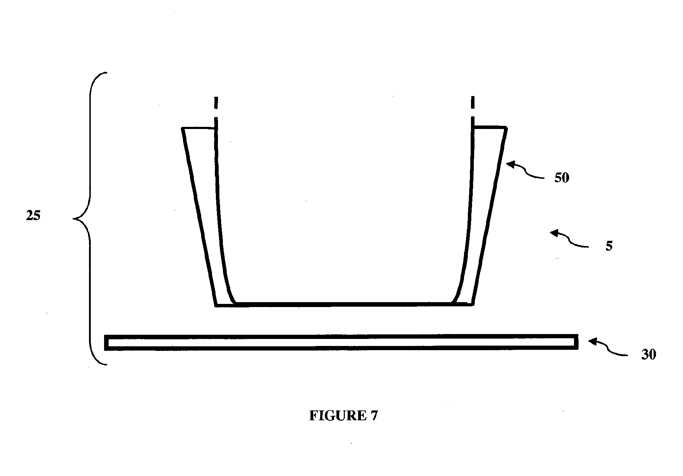

Figure 7 depicts a pet mat assembly (25) comprises the mat (30) and the container (5) with a bottom adapted to be positioned such that the movement of the container is restrained. The container (5) may further comprise an outer plastic cover which protects the container from the dent and scratches. The mat (30) may further optionally comprise of the retainer (65).

In yet another embodiment, the present invention provides a method of using the pet mat assembly (25) comprising:
(i) placing the mat (30) on a surface/floor or any suitable area for pet/owner; and
(ii) placing the container (5) having a magnetic element, over the upper surface of mat (30) such that the bottom of the container is adapted to be positioned on the mat either inside the retainer or at any other suitable place, such that the movement of the container may be restrained.

The pet mat assembly for feeding animals of the present invention may be used for animals such as pets like dog, cat; as well as kids, small babies, disabled person e.t.c.

### Advantages of the Article for Feeding Animals:

1. The pet mat assembly for feeding animals may be used to protect floor/carpets and, other surfaces from food/water spillage.
2. The pet mat assembly for feeding animals may be used for feeding animal/pet by preventing/minimizing the spillage of food/water caused by their frequent movement around their feeding bowl.
3. The pet mat assembly of using the article for feeding animals provides a method for placing/using container for animal/pet food/water on the mat such that the spillage of food/water can be minimized.
4. The pet mat assembly for feeding animals may be used to maintain cleanliness in the pet feeding area.
5. The pet mat assembly for feeding animals may be used to protect food/water in animal/pet bowl to avoid wastage of food/water and to avoid contamination with any other surface.
6. The pet mat assembly for feeding animals may be used to protect floor/carpets from stains and water damages.

## Claims

1. A pet mat assembly (25) for feeding animals comprising:
a) a mat (30) having a top layer (2) of which at least a portion is magnetized with at least one magnetic element (3), the magnetic element being magnetic particles; a bottom layer (7) composed of a non-skid material, the top layer (2) being affixed to the bottom layer (7); and
b) a container (5) having a bottom made of a ferretic material and magnetically responsive to the magnetic element (3) at the top layer (2) of the mat (30);
wherein relative movement of the container (5) with respect to the mat (30) is restricted when the container (5) is in magnetic engagement with the mat (30).

2. The pet mat assembly as claimed in claim 1, wherein the ferretic material is selected from group consisting of stainless steel, ferretic metal and ferretic alloy.

3. The pet assembly as claimed in claim 1, wherein the top layer (2) and a non-skid layer are integrated with a magnetic layer.

4. The pet mat assembly as claimed in claim 1, wherein the top layer (2) of the mat further comprises a lamination.

5. A method of using the pet mat assembly (25) according to claim 1 for feeding the animal comprising:
(i) placing a mat (30) on a surface; and
(ii) placing a container (5) having a bottom over the upper surface of the mat (30), wherein the bottom is adapted to be positioned on the mat (30) such that the movement of the container (5) is restrained.

## Patentansprüche

1. Haustiermattenanordnung (25) zum Füttern von Tieren, Folgendes umfassend:
a) eine Matte (30), eine obere Schicht (2) umfassend, von welcher mindestens ein Teil mit mindestens einem magnetischen Element (3) magnetisiert ist, wobei das magnetische Element aus magnetischen Partikeln besteht; und eine untere Schicht (7), aus einem rutschfesten Material zusammengesetzt, umfassend, wobei die obere Schicht (2) auf die untere Schicht (7) aufgeklebt ist; sowie
b) ein Behältnis (5), das einen aus ferritischem Material gefertigten Boden umfasst und magnetisch auf das magnetische Element (3) an der oberen Schicht (2) der Matte (30) reagiert;
wobei eine Relativbewegung des Behältnisses (5) gegenüber der Matte (30) eingeschränkt wird, wenn das Behältnis (5) von der Matte (30) magnetisch in Eingriff genommen wird.

2. Haustiermattenanordnung nach Anspruch 1, wobei das ferritische Material aus einer Gruppe ausgewählt wird, die aus nichtrostendem Stahl, ferritischem Metall sowie ferritischen Legierungen besteht.

3. Haustiermattenanordnung nach Anspruch 1, wobei die obere Schicht (2) und eine rutschfeste Schicht mit einer magnetischen Schicht integriert sind.

4. Haustiermattenanordnung nach Anspruch 1, wobei die obere Schicht (2) der Matte ferner eine Beschichtung umfasst.

5. Verfahren zur Verwendung der Haustiermattenanordnung (25) nach Anspruch 1 zum Füttern des Tieres, Folgendes umfassend:
i. Platzieren einer Matte (30) auf eine Oberfläche; sowie
ii. Platzieren eines Behältnisses (5), das einen Boden umfasst, auf die obere Fläche der Matte (30), wobei der Boden so angepasst ist, dass er auf eine Art und Weise auf der Matte (30) positioniert werden kann, dass die Bewegung des Behältnisses (5) eingeschränkt ist.

## Revendications

1. Assemblage de tapis pour animaux de compagnie (25) conçu pour l'alimentation des animaux, comprenant :
a) un tapis (30) comportant une couche supérieure (2) dont au moins une partie est magnétisée avec au moins un élément magnétique (3), l'élément magnétique étant composé de particules magnétiques ; une couche inférieure (7) composée d'un matériau antidérapant, la couche supérieure (2) étant fixée à la couche inférieure (7) ; et
b) un récipient (5) ayant un fond constitué d'un matériau ferrétique magnétiquement sensible à l'élément magnétique (3) se trouvant dans la couche supérieure (2) du tapis (30);
dans lequel un mouvement relatif du récipient (5) par rapport au tapis (30) est limité lorsque le récipient (5) est en prise magnétique avec le tapis (30).

2. Assemblage de tapis pour animaux de compagnie selon la revendication 1, dans lequel le matériau est choisi dans le groupe constitué d'acier inoxydable, de métaux ferrétiques et d'alliages ferrétiques.

3. Assemblage pour animaux de compagnie selon la revendication 1, dans lequel la couche supérieure (2) et une couche antidérapante contiennent une couche magnétique intégrée.

4. Assemblage de tapis pour animaux de compagnie selon la revendication 1, dans lequel la couche supérieure (2) du tapis comprend en outre un pelliculage.

5. Procédé d'utilisation de l'assemblage de tapis (25) pour animaux de compagnie selon la revendication 1, conçu pour l'alimentation des animaux, comprenant :
(i) le placement d'un tapis (30) sur une surface ; et
(ii) le placement d'un récipient (5) ayant un fond sur la surface supérieure du tapis (30), dans lequel le fond est adapté pour être positionné sur le tapis (30) de telle sorte que le mouvement du récipient (5) soit restreint.
